# EUROPEAN PATENT APPLICATION

(11) **EP 1 679 543 A1**
(43) Date of publication of application: **12.07.2006**
(21) Application number: 03758943.9
(22) Date of filing: 27.10.2003
(51) Int. Cl.: G02C 7/04, B29D 11/00

(54) **CONTACT LENS**

(71) Applicant: Menicon Co., Ltd., Nagoya-shi, Aichi-ken 460-0006 (JP)
(72) Inventor: HIBINO, Shingo, MENICON CO., LTD., Kakamigahara-shi, Gifu 509-0108 (JP); YAMASHITA, Keiji, MENICON CO., LTD., Kakamigahara-shi, Gifu 509-0108 (JP)
(74) Representative: Nicholls, Michael John
(86) International application number: PCT/JP2003/013716
(87) International publication number: WO 2005/040896

(57) **Abstract**

An easy-to manufacture contact lens exhibiting an excellent axial stability and having a novel ballast mechanism. On the front surface (36) of the contact lens (30), (i) a circular front surface (38) forming an optical portion (44) and (ii) annular front surfaces (40, 42) forming peripheral portions (46, 48) are formed with a substantially constant radial dimension around the geometrical center axis (32) of the lens in the front view thereof. Cross-sectional shapes of the front surfaces (40, 42) at the peripheral parts are varied in the circumferential direction and the thickness at the peripheral portions (46, 48) is varied in the circumferential direction, thus shifting the center of gravity G of the contact lens (30) from the geometrical center axis (32) of the lens.

## Description

### TECHNICAL FIELD

The present invention relates generally to contact lenses including both soft and hard types, and more particularly to a contact lens having a ballast mechanism for positioning the lens in the circumferential direction during wear.

### BACKGROUND ART

Some contact lenses need to be positioned in the circumferential direction during wear, such as when the lens has an optical portion for correcting astigmatism, for example. Ballast mechanisms have been proposed as one type of method for positioning the lens in the circumferential direction during wear (see JP-B-60-24924, for example). A ballast mechanism involves setting the center of gravity of the lens so as to be off-center from the geometric center axis of the lens, so that the contact lens is positioned in the circumferential direction by utilizing the action of gravity on the contact lens. However, contact lenses that employ a ballast mechanism have the problem of being too thick on the lower side, making it difficult to achieve good wear comfort.

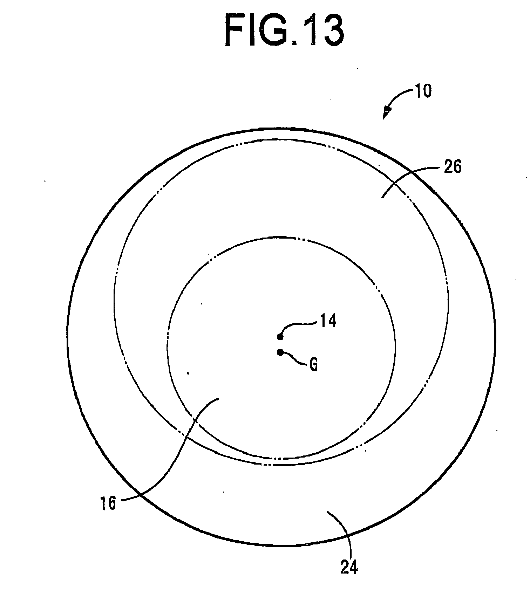

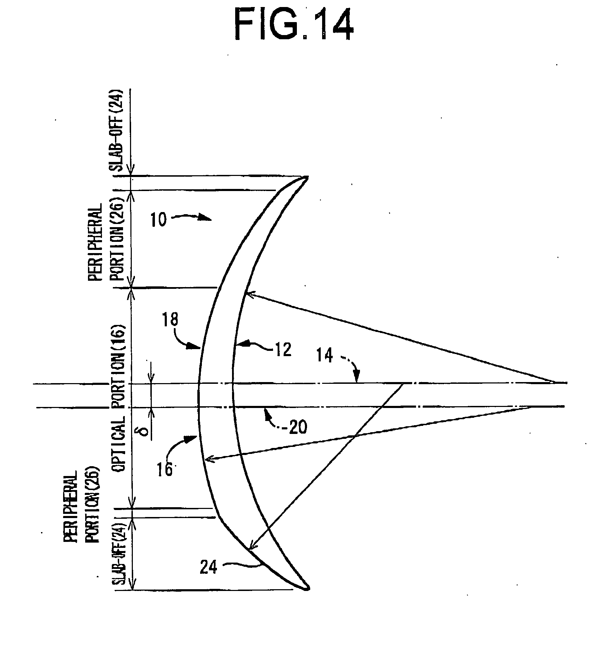

To address this problem, it has been proposed to combine slab-off with a ballast mechanism. Specifically, as depicted in FIG. 13 and FIG. 14, in a contact lens 10, an optical portion center axis 20 (where the center of curvature of a lens front surface 18 of an optical portion 16 is located) is off-centered by a distance: δ with respect to a lens geometrical center axis 14 (where the center of curvature of the lens back surface 12 is located) to produce a prism, whereby the center of gravity: G is situated off-center from the lens geometric center axis 14. Additionally, slab-off 24 in the form of thinning of the outside peripheral edge of the lens front surface 18 is produced so as to be wider on the side to which the center of gravity: G is off-centered (which is particularly thick), thereby providing a prism ballast mechanism that incorporates slab-off.

In the contact lens 10 of conventional design furnished with such a prism ballast mechanism, not only do the optical portion 16 and the peripheral portion 26 formed in the outside peripheral portion thereof have a radius of curvature that is different from the radius of curvature of the lens front surface of the slab-off 24, but additionally the diametrical width dimension of the slab-off 24 varies around the circumference of the lens, as observed in front view of the lens front surface 18. Consequently, when fabricating the mold for use in injection molding of the contact lens 10 in a resin forming mold, machining of the mold surface is fairly difficult, and separate machining process are required for lathing the mold face for forming the optical portion 16 and the peripheral portion 26 on the one hand, and the mold face for forming the slab-off 24 on the other. Consequently, an edge tends to be produced at the boundary zone of the mold face for forming the optical portion 16 and the peripheral portion 26 and the mold face for forming the slab-off 24. As a result of which there arises the problem that mold machining, and hence manufacture of the contact lens 10, is extremely cumbersome and difficult. Additionally, due to the need for a grinding process using a turret lathe of the like in order to smooth out the edge in this boundary zone, the procedure was complex due to the large number of process steps.

### DISCLOSURE OF THE INVENTION

With the foregoing in view, it is an object of the present invention to provide a contact lens furnished with a novel ballast structure, which affords outstanding axial stability during wear, while also being easy to manufacture.

Modes of the invention for solving the aforementioned problems are, described hereinbelow. Constituent elements employed in the modes set forth hereinbelow may be combined in any of various possible ways. The modes and technical features of the invention are not limited to those disclosed hereinbelow, and should be appreciated on the basis of the inventive concept disclosed in the description as a whole and the accompanying drawings, or that would be apparent to the practitioner of the art from these disclosures.

### (First Mode of the Invention)

Specifically, the invention in a first mode thereof provides a contact lens including an optical portion situated in a center portion thereof and a peripheral portion situated around the optical portion, and employing a ballast mechanism whereby an overall center of gravity is shifted from a geometrical center axis to position the lens in the circumferential direction during wear, the contact lens characterized in that: on a lens front surface, (i) a circular optical portion front surface forming the optical portion, and (ii) a peripheral front surface of annular shape forming the peripheral portion are respectively formed with substantially constant diametrical dimensions around the geometrical center axis of the lens in front view of the lens; a cross sectional shape of the peripheral front surface vary in the circumferential direction; and a thickness dimension of the peripheral portion varies in the circumferential direction to thereby shift the center of gravity from the lens geometrical center axis.

In the contact lens constructed according to this mode, the center of gravity is shifted according to the peripheral portions formed surrounding the optical portion, affording a high degree of freedom in design of the optical portion. This makes it possible, for example, to shift the center of gravity for the peripheral portions to achieve a good ballast mechanism, while reducing the prism amount.

In particular, the peripheral portion is designed so that the cross sectional shapes of the front surfaces thereof vary depend on the circumferential direction, so that as compared with a contact lens whose peripheral portion and a slab-off have a constant radius of curvature over the entire lens front surface, as lenses with conventional prism ballast structure, there is a greater degree of freedom in design of the peripheral portions, and the center of gravity for the peripheral portions can be shifted to a greater extent, making it possible to attain a ballast mechanism for advantageously stabilizing the contact lens in the circumferential direction during wear.

### (Second Mode of the Invention)

The invention in a second mode thereof provides a contact lens according to the first mode wherein the optical portion front surface is formed with a center of curvature at a location away from the geometrical center axis of the lens in a same direction as a direction of shift of the center of gravity of the peripheral portion.

In the contact lens constructed according to this mode, while the geometrical center of the optical portion coincides with the lens geometrical center, i.e, while the center point of the circular optical portion coincides with the center point of the circular lens contour in front view, the center of gravity of the optical portion is shifted from the lens geometrical center, whereby the shift in the center of gravity of the optical portion and the shift in the center of gravity of the peripheral portions collaborate to make it possible for the contact lens overall to have a greater extent of shift of the center of gravity. With this arrangement, it becomes possible to more advantageously attain stability in the circumferential direction during wear of the contact lens.

### (Third Mode of the Invention)

The invention in a third mode thereof provides a contact lens according to the first or second mode wherein the peripheral portion is composed of a first peripheral portion connected to an outer junction of the optical portion, and a second peripheral portion connected to an outer junction of the first peripheral portion and extending out to an edge portion; wherein the first peripheral portion and the second peripheral portion are each of annular shape of substantially constant diametrical dimension around the lens geometrical center axis, with a lens front surface of the first peripheral portion having an aspheric cross section, while a lens front surface of the second peripheral portion has spheric cross section.

In the contact lens constructed according to this mode, the second peripheral portion, which constitutes the outside peripheral portion of the contact lens that contacts the eyelid, can be formed with a smooth shape on the lens front surface, and the thickness dimension thereof can be made thin around the entire circumference, whereby excellent wear comfort may be attained.

In preferred practice, on the lens front surface of the first peripheral portion, the radius of curvature and tangent angle of slope will vary continuously along the entire length along the diametrical direction in diametrical cross section so as to produce a continuous curved shape overall, without an edge-shaped junction point. More preferably, on the lens front surface, the inner junction and the outer junction edge of the first peripheral portion will respectively connect with the optical portion and the second peripheral portion by a smooth transition with a common tangent with no inflection point. This design makes it possible to reduce wearer's discomfort caused by an edge-shaped inflection point formed in the circumferential direction, and to advantageously avoid the occurrence of a ring shaped line on the lens exterior.

A lens front surface of the first peripheral portion meeting this condition can be attained, for example, by a diametrical cross sectional shape that is defined by a polynomial (quadratic or higher) expression, or by a conical curve or spline curve or combination thereof. Specifically, for example, by establishing suitable diametrical cross sections at an appropriate number of locations in the circumferential direction, and interconnecting these segments in the direction by a suitable interpolation method, it is possible to design the overall shape of the lens front surface of the first peripheral portion.

### (Fourth Mode of the Invention)

The invention in a fourth mode thereof provides a contact lens according to the third mode, wherein a difference between a minimum value and a maximum value for lens thickness at inner junction of the second peripheral portion is no more than 0.3 mm around an entire circumference.

In the contact lens constructed according to this mode, the second peripheral portion (which owing to the fact that it contacts the cornea and eyelid, has a particularly large effect on wear comfort and stability) is formed without any appreciable localized change in thickness dimension in the circumferential direction, thus making it possible to attain a higher level of wear comfort. The shape of the lens front surface of the second peripheral portion may also be designed, for example; by establishing suitable diametrical cross sections at an appropriate number of locations in the circumferential direction, and interconnecting these segments in the circumferential direction by a suitable interpolation method, to produce the overall shape of the lens front surface of the second peripheral portion. In this mode, the difference between the minimum value and the maximum value for lens thickness at the inner junction of the second peripheral portion will preferably be no more than 0.1 mm around the entire circumference:

### (Fifth Mode of the Invention)

The invention in a fifth mode thereof provides a contact lens according to the third or fourth mode, wherein a cross sectional shape of the second peripheral portion is substantially constant in the circumferential direction.

In the contact lens constructed according to this mode, since a substantially constant cross sectional shape is imparted around the entire circumference in the circumferential direction to the second peripheral portion, which makes up the peripheral portion of the contact lens having a particularly large effect on shape retention of the lens, it is possible to reduce strain deformation in the contact lens, and achieve better and consistent shape retention.

### (Sixth Mode of the Invention)

The invention in a sixth mode thereof provides a contact lens according to any one of the first to fifth modes, wherein a lens front surface and/or lens back surface of the optical portion is constituted as a toric surface.

Toric lenses have been widely used to date for correction of astigmatism. With such lenses, it is necessary for the relative positions of the astigmatism axis of the eye and the cylindrical axis in the optical portion of the contact lens to be aligned stably and with a high degree of accuracy. Accordingly, the present invention is advantageously implemented in toric lenses in particular. Implementation of the invention in such lenses affords stable correction of astigmatism, while maintaining good wear comfort.

### (Seventh Mode of the Invention)

The invention in a seventh mode thereof provides a contact lens according to any one of the first to sixth modes, wherein a lens front surface and/or lens back surface of the optical portion is constituted as a multifocal aspherical surface.

Bifocal lenses with two focal points, multifocal lenses with three or more focal points, progressive multifocal lenses, and other such multifocal lenses are widely employed to provide near/far vision contact lenses for correcting presbyopia. Particularly, with multifocal lenses of segment type or other lens design in which lens power distribution is not uniform about the optical center, positioning of the lens in the circumferential is necessary, as with the toric lenses discussed previously. Accordingly, the invention is advantageously implemented in multifocal lenses as well, and implementation of the invention in such lenses affords stable correction of presbyopia, while maintaining good wear comfort.

### (Eighth Mode of the Invention)

The invention in an eighth mode thereof provides a method for manufacture of a contact lens according to any one of the first to seventh modes, wherein a forming die of synthetic resin is produced using a metal mold whose entire cavity-forming face has been continuously machined through a lathe turning process by turning about a single axis, whereby the lens front surface including the optical portion front surface and the peripheral portion front surface are formed in the forming die by means of the cavity-forming face of the metal mold; and the contact lens is molded using the forming die.

According to the method of the present invention, a mold for a forming die to produce the contact lens of novel structure constructed according to any of the first to seventh modes of the invention described previously may be machined easily by forming the entire cavity-forming face through a lathe turning process by turning about a single axis. Consequently, it is possible to readily manufacture the objective contact lens with excellent precision and with good operability in the entire process, including mold fabrication.

In particular, the entire zone of the lens front surface (including the optical portion and the peripheral portion) of the objective contact lens is of concentric circle shape centered on the lens geometrical center axis, when fabricating the mold for the forming die used for molding the contact lens. This makes it possible for the entire cavity-forming face to be formed through a lathe turning process by turning about a single ,axis, and consequently high levels of dimensional accuracy of the metal mold (and hence of the contact lens per se) and production efficiency are advantageously assured.

An NC lathe or other apparatus affording numerical control of cutting tool position with respect to the workpiece can be advantageously employed in machining to the cavity-forming face in accordance with the method of the present invention. For instance, during the process of lathe machining the cavity-forming face in a spiral trajectory, the cutting tool is gradually moved in the diametrical direction of the cavity-forming face while turning the mold about the center axis of the cavity-forming face. By means of creating reciprocating displacement of the cutting tool relative to the mold in the center axis direction of the mold depending on the rotation angle about the center axis of the mold, it is possible to advantageously produce a mold for a contact lens whose center of gravity is shifted by means of a prism or the like.

### BRIEF DESCRIPTION OF THE DRAWINGS

FIG. 1 is a plan view depicting a contact lens according to an embodiment of the invention;
FIG. 2 is a longitudinal sectional view in the radial direction: θ = 0° depicting the contact lens according to the first embodiment of the invention;
FIG. 3 is another longitudinal sectional view in the radial direction: θ = 90° of the contact lens shown in FIG. 2;
FIG. 4 is another longitudinal sectional view in the radial direction: θ = 180° of the contact lens shown in FIG. 2;
FIG. 5 is a graph depicting the second junction thickness dimension in the contact lens shown in FIG. 2;
FIG. 6 is a longitudinal sectional view in the radial direction: θ = 0° depicting the contact lens according to the second embodiment of the invention;
FIG. 7 is another longitudinal sectional view in the radial direction: θ = 90° of the contact lens shown in FIG. 6;
FIG. 8 is another longitudinal sectional view in the radial direction: θ = 180° of the contact lens shown in FIG. 6;
FIG. 9 is a longitudinal sectional view in the radial direction: θ = 0° depicting the contact lens pertaining to the third embodiment of the invention;
FIG. 10 is another longitudinal sectional view in the radial direction: θ = 90° of the contact lens shown in FIG. 9;
FIG. 11 is another longitudinal sectional view in the radial direction: θ = 180° of the contact lens shown in FIG. 9;
FIG. 12 is a model diagram describing a contact lens manufacturing step according to the method of the invention;
FIG. 13 is a front view explanatory diagram showing a simplified depiction of a contact lens having a prism ballast mechanism of conventional structure; and
FIG. 14 is a longitudinal section explanatory diagram showing a simplified depiction of the contact lens of conventional structure depicted in FIG. 13.

### BEST MODE FOR CARRYING OUT THE INVENTION

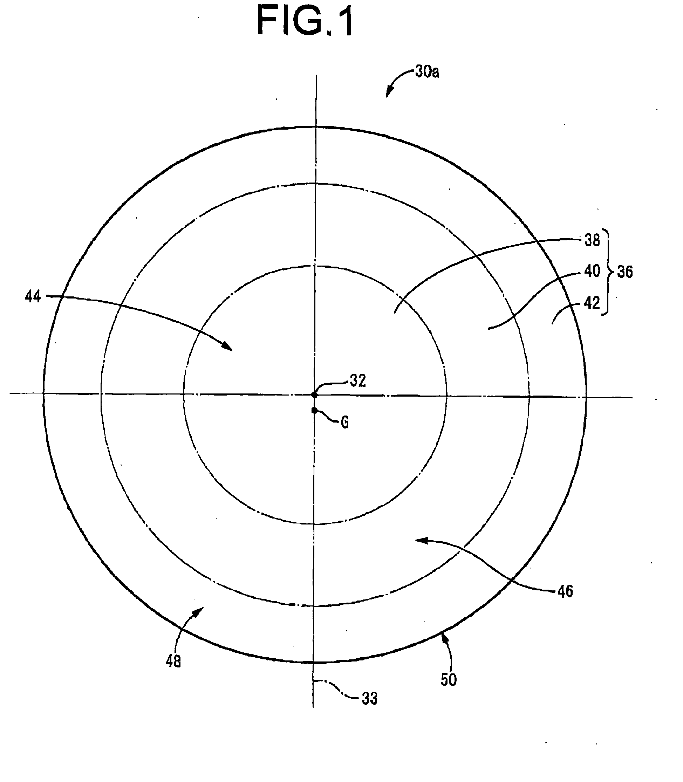

A more detailed understanding of the invention will be provided through the following description of the embodiments. In the description hereinbelow, as a general role, the term vertical direction shall be used in reference to the approximately vertical direction of the contact lens during wear, which is also the vertical direction in FIG. 1.

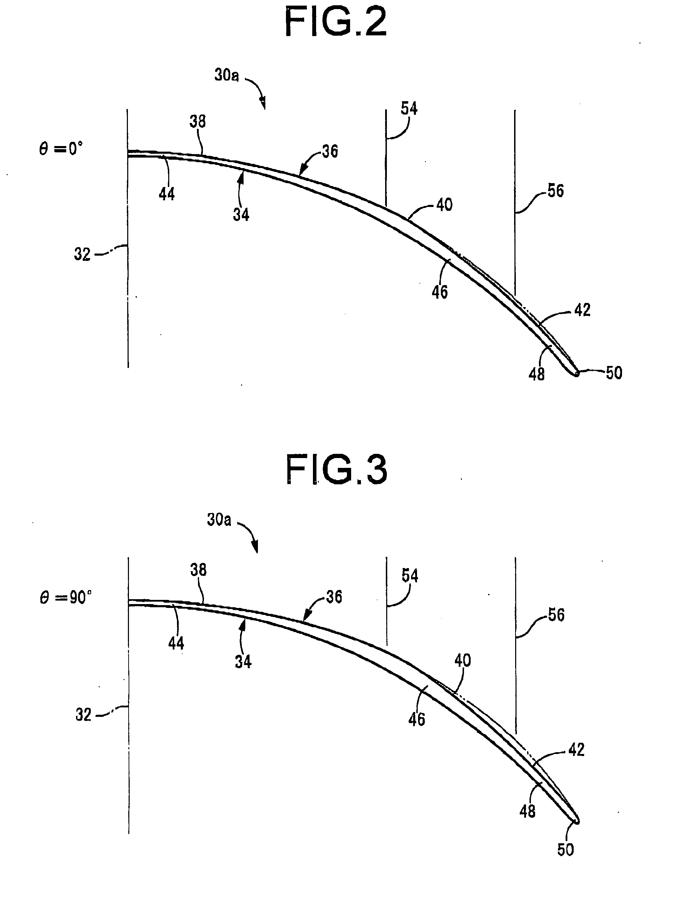

First, a specific example of a contact lens 30a of structure according to the invention will be described with reference to FIGS. 1-4. The contact lens 30a has a partial generally spherical shell shape overall. As is commonly known, the contact lens 30a is used by wearing it on the corneal surface of the eye. The contact lens 30a of this embodiment is symmetrical in shape in relation to a single diametrical line 33 passing through the lens geometrical center axis 32 which is the center axis of the lens contour, and is endowed with a ballast mechanism such that this diametrical line 33 is generally coincident with the vertical direction during wear. In FIGS. 2-4, the diametrical cross sectional shape of the lens is depicted at three locations θ = 0°, 90°, and 180° in the circumferential direction about the lens geometrical center axis 32 with reference to the upward direction in FIG. 1 (θ = 0°) on the diametrical line 33 which is the axis of symmetry.

More specifically, the contact lens 30a of this embodiment is of circular shape in front view as depicted in FIG. 1, having a lens back surface 34 which is a generally concave spherical surface and a lens front surface 36 which is a generally convex spherical surface. The lens back surface 34 overall has a base curve of generally concave spherical shape corresponding to the shape of the surface of the cornea on which it will be worn. The lens front surface 36 is composed of an optical portion front surface 38 which is circular in plan view, a first peripheral portion front surface 40 which is annular in shape, and a second peripheral portion front surface 42 which is annular in shape. These zones 38, 40, 42 are formed with circular peripheral edges disposed concentrically about the lens geometrical center axis 32.

By means of this design, the contact lens 30a is structurally composed of an optical portion 44 whose lens front surface is formed by the optical portion front surface 38; a first peripheral portion 46 whose lens front surface is formed by the first peripheral portion front surface 40; a second peripheral portion 48 whose lens front surface is formed by the second peripheral portion front surface 42; and an edge portion 50 situated at the outermost peripheral portion and connecting to the lens back surface.

The lens back surface 34 has a base curve of generally concave spherical shape corresponding to the shape of the surface of the cornea on which it will be worn. The cross sectional shape in the diametrical direction of the lens back surface 34 may be any shape, including ones described by a higher order polynomial expression.

The optical portion front surface 38 is given an aspherical face or spherical face with an appropriate radius of curvature so as to be able to attain, in cooperation with the lens back face 34, optical characteristics providing the required vision correction, for example, monofocal, bifocal, or multifocal lens power. Further, in the case of a contact lens for correcting astigmatism, in which the invention may be implemented advantageously, the optical portion 44 should have the optical characteristics required for astigmatism correction. To meet this end, cylindrical lens surface are combined so as to produce appropriate cylindrical power at an appropriate cylindrical axis angle, on at least one of the lens back face 34 and the optical portion front surface 38.

Further, in the optical portion front surface 38, the optical center axis 52 thereof may be established shifted by an appropriate distance: δ downward from the lens geometrical center axis 32 if needed. By so doing, a prism is established in the optical portion 44, and the center of gravity: G of the optical portion 44 can be established shifted downward from the lens geometrical center axis 32.

The first peripheral portion 46 and the second peripheral portion 48, on the other hand, do not affect the optical characteristics of the contact lens 30a, and thus their shape can be established in a manner unconstrained by the required optical characteristics. Consequently, by shifted downward the center of gravity of the first peripheral portion 46 from the lens geometrical center axis 32, it is possible to establish a shape for the first peripheral portion front surface 40 whereby, in cooperation with the downward shift of the center of gravity: G of the optical portion 44, the center of gravity of the contact lens 30a as a whole shifts downward, so as advantageously realize a ballast mechanism. Regarding the second peripheral portion 48, it is possible to establish a shape for the second peripheral portion front surface 42 such that the contact lens 30a is imparted with good wear comfort and positional stability during wear.

Specifically, the first peripheral portion front surface 40 and the second peripheral portion front surface 42 may have a variety of forms in consideration of design and production operability. It is favorable for example to employ for the first peripheral portion front surface 40 a diametrical cross sectional shape defined by a quadratic or higher polynomial expression, or by a conical curve or spline curve or combination thereof; and to employ for the second peripheral portion front surface 42 a diametrical cross sectional shape defined by an arc shape or quadratic curve shape.

In order to attain good wear comfort, preferably, the first peripheral portion front surface 40 will have a shape such that, in any radial cross section thereof, the thickness dimension of the first peripheral portion 46 does not exceed the maximum thickness dimension of the optical portion 44. Ordinarily, in the case of a contact lens 30a whose optical portion 44 has minus diopter lens power, in each radial cross section, the first peripheral portion 46 is thickest at the location of a first junction 54, which represents the zone of connection of the optical portion 44 and the first peripheral portion front surface 40. In the case of a contact lens 30a whose optical portion 44 has plus diopter lens power, in each radial cross section, the thickness of the first peripheral portion 46 is thinner than either the optical portion 44 on the optical center axis 52 or the first junction 54, whichever is thicker.

In order to advantageously attain stability in the circumferential direction during wear of the contact lens 30a by means of the ballast mechanism, the first peripheral portion 46 is aggressively varied in its thickness dimension in the circumferential direction. The extent of downward shift of the center of gravity of the first peripheral portion 46 with respect to the lens geometrical center axis 32, at a minimum, will be greater than the extent of shift of the center of gravity of the second peripheral portion 48 and preferably greater than the extent of shift of the center of gravity of the optical portion 44. Of course, the center of gravity of the second peripheral portion 48 need not necessarily be shifted in position.

In order to advantageously attain good wear comfort as well as shape retention of the contact lens 30a when placed on the finger, it is preferable for the second peripheral portion front surface 42 to be shaped so as to spread out with substantially unchanging thickness, or so as to become slightly thinner towards the outside periphery, based on the thickness dimension of the second junction 56 which is the zone of connection between the first peripheral portion 46 and the second peripheral portion 48. In particular, in order to yet more advantageously attain shape retention of the contact lens 30a when placed on the finger, the diametrical cross sectional shape of the second peripheral portion 48 will preferably be substantially unchanged around the entire circumference, in the circumferential direction, and ideally, the thickness differential in any diametrical region of the second peripheral portion 48 around the entire circumference in the circumferential direction (i.e. the difference between the maximum value and minimum value of the thickness dimension on the circumference) will not exceed 0.3 mm.

In particular, in the contact lens 30a of this embodiment having an optical portion 44 with a minus diopter, the maximum thickness dimension of the second peripheral portion 48 is set to less than the minimum thickness dimension of the first peripheral portion 46. By so doing, the contact lens 30a becomes thinner going towards the outside periphery, advantageously affording both good wear comfort and shape retention.

In order to attain even better wear comfort, in preferred practice the ' first peripheral portion front surface 40 and the second peripheral portion front surface 42 will respectively have a smooth shape devoid of inflection points. More preferably, the lens front surface 36, including the lens front surfaces at the first junction 54 which is the connection point of the optical portion front surface 38 with the first peripheral portion front surface 40, and the second junction 56 which is the connection point of the first peripheral portion front surface 40 with the second peripheral portion front surface 42, will have a continuously varying tangent slope angle in the diametrical direction over substantially the entire surface thereof, thereby affording a continuous smooth shape devoid of edge-shaped inflection points.

Specifically, in the contact lens 30a of the embodiment depicted in FIGS. 2 -4, the outside diameter (DIA) is 14.0 mm. The lens back surface 34 has a shape combining a spherical surface with a radius of curvature of 8.70 mm whose center of curvature is situated on the lens geometrical center axis 32, with a cylindrical lens surface having a cylinder lens power of -1.50 diopter whose cylinder axis extends on the horizontal where the cylinder axis angle is 180°. The lens front surface 36 employs a spherical shape the thickness dimension (Ct) of which is 0.08 mm at the lens geometrical center axis 32, and has power (P) of -8.00 diopters. The optical center axis 52, which is the center of curvature of the lens front surface 36, is shifted downward by eccentricity (δ) of 0.14 mm with respect to the lens geometrical center axis 32, imparting a prism to the optical portion 44. In the first peripheral portion front surface 40, on the other hand, the cross sectional shape in the diametrical direction in each region on the circumference is established using a cubic curve. The second peripheral portion 42, in each region on the circumference, has diametrical cross sectional shape established using an arc. The lens front surface 36 is designed to have a smooth diametrical cross section sharing a signal tangent and devoid of inflection points, even at the first junction 54 and the second junction 56.

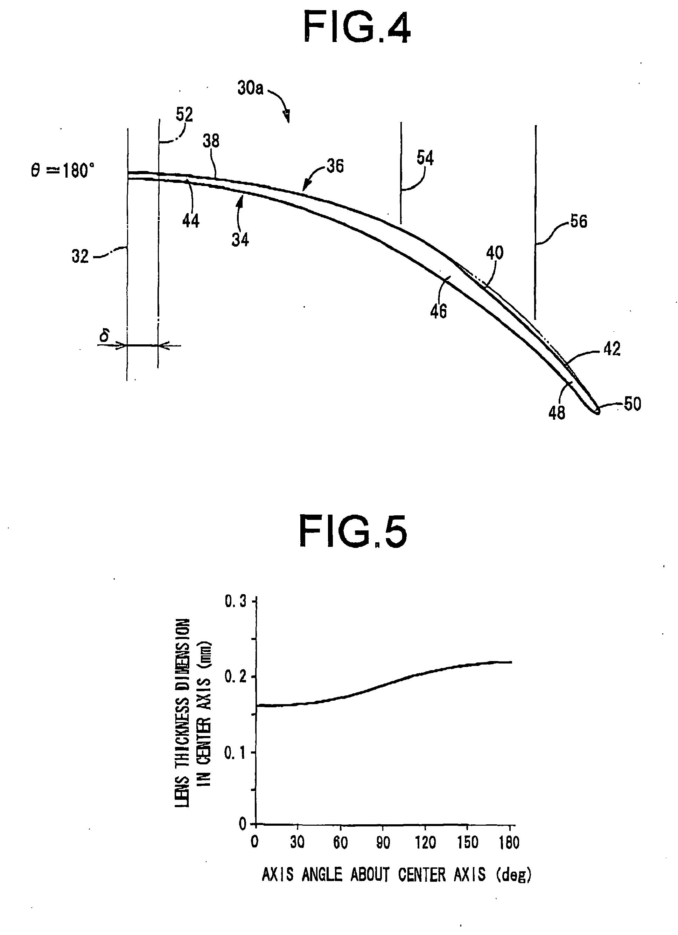

As shown in FIG. 5, the second peripheral portion front surface 42 is designed such that, at the second junction 56, which is the zone of with the largest difference in thickness dimension of the second peripheral portion 48 on the circumference, the minimum thickness dimension is 0.16 mm and the maximum thickness dimension is 0.22, for a thickness dimension differential of 0.06 mm on the entire circumference. The first peripheral portion front surface 40 and the second peripheral portion front surface 42 each have diametrical cross sectional shape that varies in the circumferential direction, but are of curved surface shape smoothly continuous in an annular configuration and devoid of edge-shaped inflection points in the circumferential direction.

Contact lenses of shape according to the present invention can be designed with various optical characteristics and geometric shapes adapted to large number of contact lens wearers, by means of appropriate modification of the outside diameter dimension (DIA), radius of curvature (base curve) of the lens back surface 34, optical characteristics of the optical portion 44, inside and outside diameter dimensions of the first and second peripheral portions 40, 42, and other parameters; in most cases, lenses are provided commercially in a series which is a combination of several lens types whose various parameters vary at some appropriate interval.

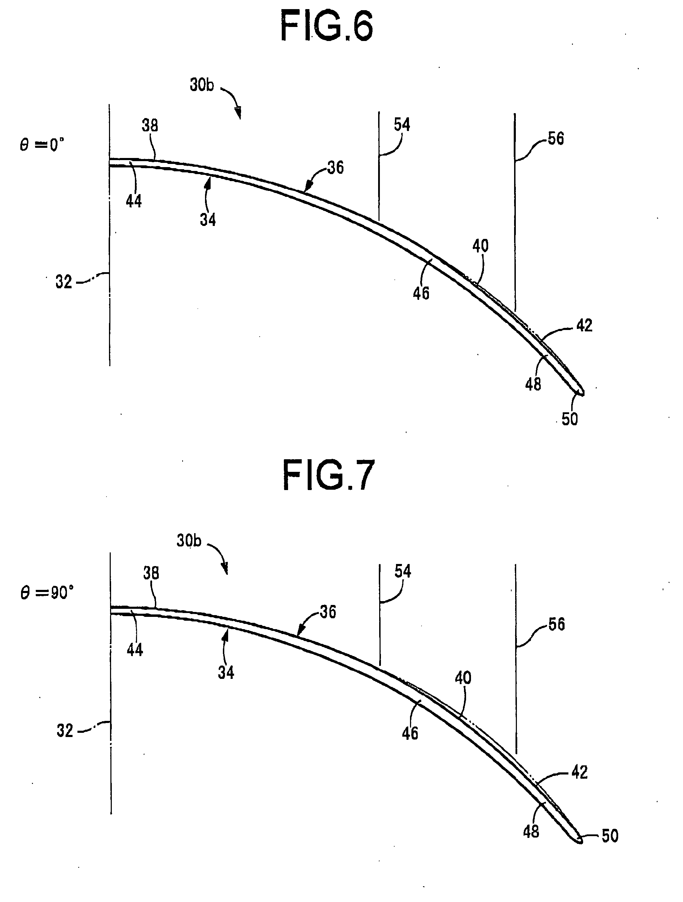

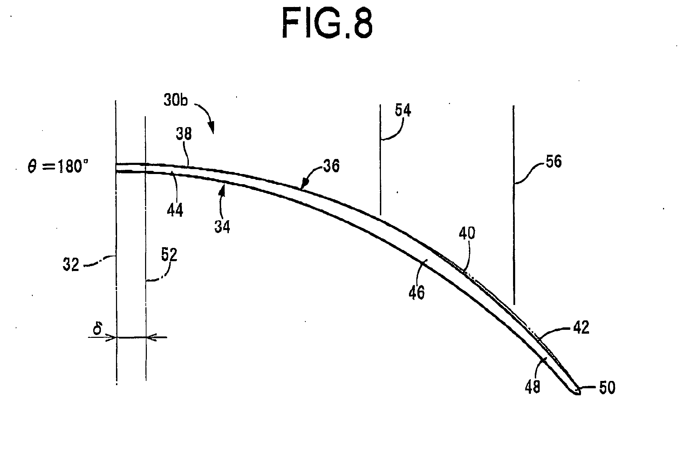

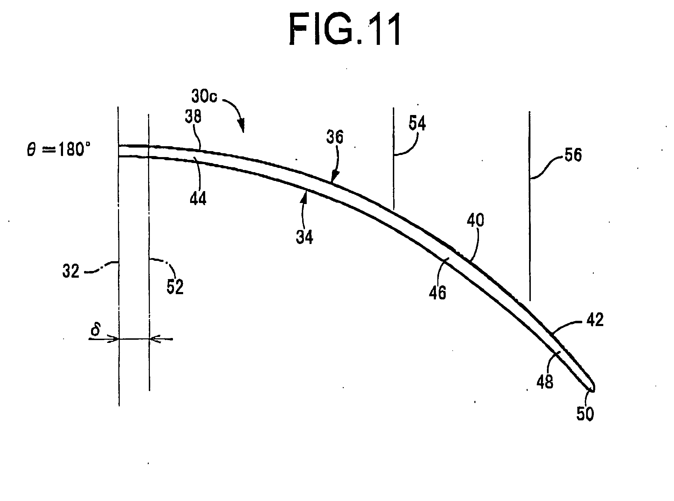

Accordingly, the optical characteristics, geometric shape and so on of contact lenses are not limited to those of the contact lens 30a given by way of specific example. For reference, contact lenses 30b and 30c having other settings for optical characteristics are depicted in FIGS. 6-8 and FIGS. 9-11, shown in diametrical cross section corresponding to FIGS. 2-4 in the embodiment. These contact lenses 30b, 30c each have the same basic construction as the contact lens 30a depicted in FIGS. 2-4, and as such will not be described in any detail.

Specitically, the contact lens 30b depicted in FIGS. 6-8 has an outside diameter dimension (DIA) of 14.0mm, and its lens back surface 34 has a shape combining a spherical surface with a radius of curvature of 8.70 mm whose center of curvature is situated on the lens geometrical center axis 32, with a cylindrical lens surface having a cylinder lens power of -1.50 diopter whose cylinder axis angle is 180°. The lens front surface 36 employs a spherical shape the thickness dimension (Ct) of which is 0.11 mm at the lens geometrical center axis 32, and has power (P) of -3.00 diopters. The optical center axis 52, which is the center of curvature of the lens front surface 36, is shifted downward by eccentricity (δ) of 0.14 mm with respect to the lens geometrical center axis 32, imparting a prism to the optical portion 44. In the first peripheral portion front surface 40, the cross sectional shape in the diametrical direction in each region on the circumference is established using a cubic curve, The second peripheral portion 42, in each region on the circumference, has diametrical cross sectional shape established using an arc. The first peripheral portion front surface 40 and the second peripheral portion front surface 42 respectively have a curved surface shape smoothly continuous in an annular configuration and devoid of edge-shaped inflection points in the both the diametrical and circumferential directions.

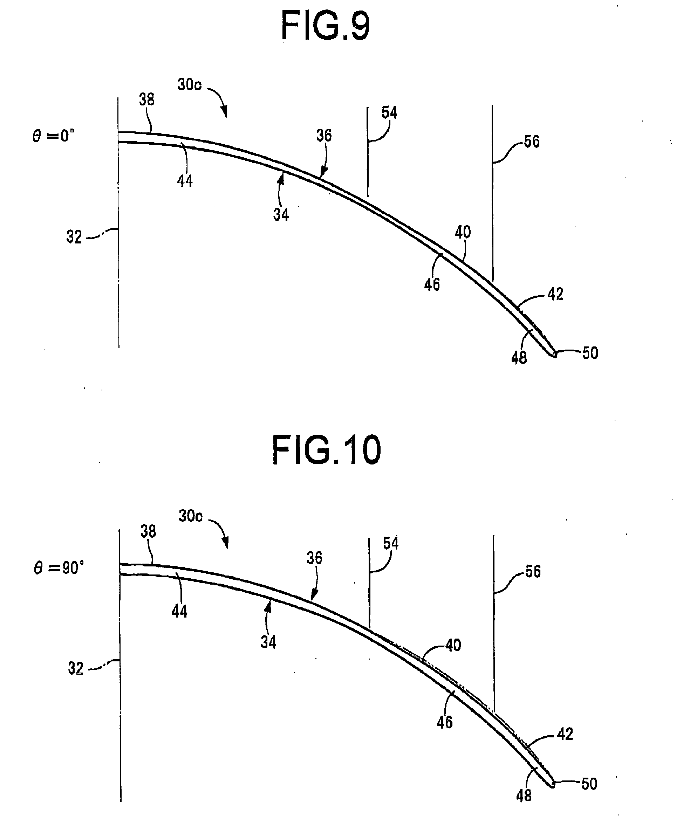

The contact lens 30c depicted in FIGS. 9-11 has an outside diameter dimension (DIA) of 14.0mm, and its lens back surface 34 has a shape combining a spherical surface with a radius of curvature of 8.70 mm whose center of curvature is situated on the lens geometrical center axis 32, with a cylindrical lens surface having a cylinder lens power of -1.50 diopter whose cylinder axis angle is 180°. The lens front surface 36 employs a spherical shape the thickness dimension (Ct) of which is 0.16 mm at the lens geometrical center axis 32, and has power (P) of +2.00 diopters. The optical center axis 52, which is the center of curvature of the lens front surface 36, is shifted downward by eccentricity (δ) of 0.14 mm with respect to the lens geometrical center axis 32, imparting a prism to the optical portion 44. In the first peripheral portion front surface 40, the cross sectional shape in the diametrical direction in each region on the circumference is established using a cubic curve. The second peripheral portion 42, in each region on the circumference, has diametrical cross sectional shape established using an arc. The first peripheral portion front surface 40 and the second peripheral portion front surface 42 each have curved surface shape smoothly continuous in an annular configuration and devoid of edge-shaped inflection points in the both the diametrical and circumferential directions.

Using styrene/acrylonitrile copolymer, we test manufactured contact lenses of the following specifications: base curve = 9.0 mm; optical portion 44 power = +1.75 diopter; DIA = 14.0 mm; lens back surface 34 cylindrical lens power (Cyl) = -1.00 diopter; cylindrical lens axis angle (Ax) = 180°; and eccentricity (δ) at the optical center axis 52 which is the center of curvature of the lens front surface 36 = 0.14 mm. When these test contact lenses were worn, axial stability (positional stability in the circumferential direction about the center axis) was observed to be good, and it was confirmed that even during blinking and eye movement, the prism basal axis was stable in the plumb vertical direction. In the test contact lenses the center of the optical portion was substantially coincident with the lens geometrical center (center point of the circular outside edge of the lens), and it was confirmed that during wear the optical portion and the pupil were maintained in good relative position.

As compared with a contact lens 10 of conventional design such as that depicted in FIGS. 13 -14, having a peripheral portion 26 whose front surface shape is continuous with the optical portion 16, and a prism ballast mechanism of conventional design wherein the front surface outside peripheral edge of the peripheral portion 26 is connected to an edge portion by means of slab-off 24 formed on the outside peripheral portion thereof, the contact lenses 30a, 30b, 30c of construction according to the present invention afford a higher degree of freedom in design of the shape of the first peripheral portion 46 and second peripheral portion 48. This makes it possible to establish a large shift distance for the center of gravity while keeping the overall thickness dimension of the first peripheral portion 46 to a minimum, thereby affording excellent wear comfort.

In FIGS. 2-4, FIGS. 6-8, and FIGS. 9-11, the shape of the lens front surface determined by design techniques for contact lenses with a prism ballast mechanism of conventional structure are indicated by imaginary lines. From these drawings as well, it will be apparent that the contact lenses 30a, 30b, 30c of the embodiment are sufficiently thin. When cumulative thickness was calculated for the test contact lenses discussed above, it was confirmed that while the shift distance of the center of gravity was about the same as that of contact lenses with a prism ballast mechanism of conventional structure, total cumulative lens thickness was reduced by about 15%.

The contact lenses 30a, 30b, 30c having the structure discussed above (hereinafter referred to collectively as "contact lenses 30") can all be shaped by means of direct cutting of pre-polymerized blocks of appropriate material. However, in consideration of productivity and consistent quality, they are advantageously produced by molding. Contact lens molding methods per se are known arts, being disclosed in JP-A-2003-94458 for example, while not discussed in detail. The contact lenses 30 of the embodiment include the first peripheral portion front surfaces 40 and second peripheral portion front surfaces 42 each formed with different cross sectional shapes in the circumferential direction, while having circular inside and outside peripheral surfaces that are concentric about the lens geometrical center axis 32. Consequently, the mold used during molding, and hence the contact lenses 30 per se, can be manufactured easily.

Specifically, it is typically favorable to employ a molding method for manufacture of contact lenses 30 furnished with the desired lens front and back surfaces 36, 34, by employing a male mold having a mold face of spherical convex shape corresponding to the lens back surface 34 and a female mold having a mold face of spherical concave shape corresponding to the lens front surface 36. The male and female molds are assembled with each other to form a substantially hermetic mold cavity defined between the mold faces of the two molds, into which is injected a prescribed polymerizable monomer.

In consideration of productivity, manufacturing cost and similar factors, the male mold and the female mold are typically formed of suitable synthetic resin material such as polyamide resin, and are disposable. Accordingly, the male mold and the female mold are supplied continuously through mass production, using injection molding with metal molds or similar process.

The shape of the molding faces of the metal molds for this purpose are transferred as it is to the male mold and the female mold, and as such determine the shape of the front and back surfaces 36, 34 of the contact lens 30. Accordingly, to obtain contact lenses 30 furnished with front and back surfaces 36, 34 of specific shape as described previously, it is important that the molds be manufactured by machining with a high degree of precision. Also, mold production costs must also be considered.

Here, in the desired contact lenses 30, not only the lens back surface 34, but also the lens front surface 36 has an optical portion front surface 36, a first peripheral portion front surface 40, and a second peripheral portion front surface 42 constituted as concentric zones about the lens geometrical center axis 32. Consequently, in the metal molds used for injecting molding of the contact lens 90 forming molds, metal mold cavity faces will be formed with shapes in which the zones corresponding to the optical portion front surface 36, the first peripheral portion front surface 40, and the second peripheral portion front surface 42 are disposed on the same center axis.

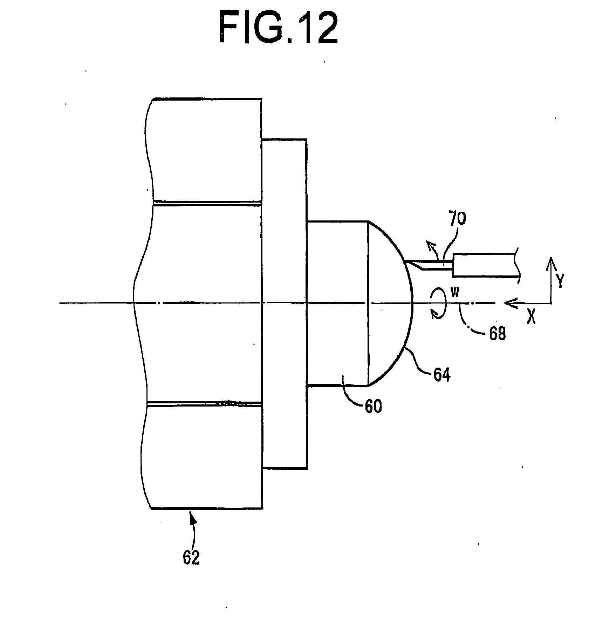

The cavity faces of the metal molds are advantageously machined using an NC lathe, which is a machine tool affording numerical control. Specifically, as depicted in FIG. 12 for example, the metal mold material 60 is held chucked to the machining spindle 62 of the lathe, with the generally spherical convex cavity face 64 (corresponding to the lens front surface 36 of the contact lens 30) held aligned with a rotation center axis 68 of the machining spindle 62. The desired cavity face 64 is machined by turning the metal mold material 60 about the center axis by means of the machining spindle 62, while carrying out lathing by means of a cutting tool 70 with controlled position and movement. During this process, the cutting tool 70 is continuously controlled in terms of its movement to one side in the radial direction from the machining spindle 62. At the same time, its movement in the axial direction of the machining spindle 62 is also controlled, depending on the angle of rotation of the machining spindle 62. By so doing, the trajectory of the cutting tool 70 forms a spiral shape on the cavity face 64, imparting to the cavity face 64 a surface shape that varies in each radial direction about the center axis.

The position of the cutting tool 70 in the diametrical and axial directions can be designated, for example, by setting coordinate values in the X axis direction parallel to the machining spindle 62 and coordinate values in the Y axis direction axis-perpendicular to the machining spindle 62, with reference to the value of the axial angle: m of the machining spindle 62 about the center axis. Typically, the controlled positions of the cutting tool 70 are determined by designating positions of the cutting tool 70 at multiple locations by means of pre-establishing an X axis direction value for each appropriate axial angle about the machining spindle 62, at each of multiple locations established at appropriate intervals in the Y axis direction, and then deriving cutting tool 70 positions between these multiple sites, by means of a suitable interpolation method such as linear interpolation or arc interpolation.

Specifically, on the cavity face 64 of the mold, whose shape must correspond to that of the lens front surface 36, the zones corresponding to the optical portion front surface 38 and to the first and second peripheral portion front surfaces 40, 42 are formed as multiple zones having circular peripheral portion that are position on the same center axis relative to the machining spindle 62, and consequently during the lathing process about the single machining spindle 62 as discussed above, the cutting position of the cutting tool 70 during a single turn will not move in and out across multiple zones. Accordingly, position control of the cutting tool 70 can be carried out easily and with high precision, and the desired surface shape can be formed with good process efficiency and precision.

Accordingly, the desired contact lenses 30 can be manufactured advantageously by means of polymerization molding of a prescribed polymerizable monomer as discussed previously, by means of a molding mold which is a combination of a female mold injection-molded using a metal mold furnished with the lathed cavity face 64 described above, and a male mold prepared separately by injection molding in similar fashion.

While the present invention has been described in detail in terms of certain preferred embodiments, these are merely illustrative. The invention should not be construed as being limited to the specific disclosure in the embodiment described hereinabove.

For instance, whereas in the embodiment hereinabove, the outside peripheral portion of the optical portion front surface 38 has a shape divided into two zones of annular shape, namely, the first peripheral portion front surface 40 and the second peripheral portion front surface 42, it would be possible instead to form a single peripheral portion front surface of annular shape not divided into these zones, by means of establishing a diametrical cross sectional shape by means of an appropriate multidimensional polynomial equation, conical curve, spline curve, or some combination thereof.

Alternatively, the outside peripheral portion of the optical portion front surface 38 may be composed of three or more divided peripheral front surfaces, each of annular shape. Particularly where mold machining is carried out with a numerically controlled lathe using the manufacturing method according to the method of the present invention, there is substantially no increase in complexity of process steps even where three or more divided peripheral front surfaces are employed, and thus good processability, productivity, and good production cost can be maintained.

The present invention is of course applicable to contact lenses of various types requiring axial stability during wear. However, the invention is especially advantageously applicable to contact lenses of the kind described in (1) to (6) below, or any combination of (1) to (3) or (4) to (6).
(1) contact lenses whose lens back surface is a toric surface
(2) contact lenses whose lens front surface is a toric surface
(3) contact lenses whose lens front and back surfaces are both toric surfaces
(4) contact lenses whose lens front surface is a multifocal aspherical surface
(5) contact lenses whose lens back surface is a multifocal aspherical surface
(6) contact lenses whose lens front and back surfaces are both multifocal aspherical surfaces

Of the contact lenses of (4) to (6), the invention is particularly favorably applicable to contact lenses whose lens front surface and/or lens back surface is an aspherical surface of bifocal type.

Various other variations, modifications, and improvements to the invention will be apparent to the skilled practitioner of the art, and such reduction to practice shall be considered to fall within the scope of the invention insofar as there is no departure from the spirit thereof.

As will be understood from the description hereinabove, in contact lenses according to the present invention, since the geometrical center of the optical portion is coincident with the lens geometrical center in plan view, good wear comfort can be afforded. Additionally, by varying the shape of the lens front surface in the circumferential direction at the peripheral portion formed surrounding the optical portion, the center of gravity can be shifted to the peripheral portion located diametrically outward from the optical portion, whereby a good ballast mechanism can be attained.

In contact lenses constructed in accordance with the present invention, the optical portion and the peripheral portions are formed concentrically about the lens geometrical center in plan view, and thus the molds for forming the lens can be machined by lathing about a single axis. Consequently, according to the method of the invention, a desired contact lens can be manufactured advantageously, with good production efficiency and excellent dimensional accuracy.

## Claims

1. A contact lens including an optical portion situated in a center portion thereof and a peripheral portion situated about the optical portion, and employing a ballast mechanism whereby an overall center of gravity is shifted from a geometrical center axis to stabilize the lens in the circumferential direction during wear, the contact lens **characterized in that**:
on a lens front surface, (i) a circular optical portion front surface forming the optical portion, and (ii) a peripheral front surface of annular shape forming the peripheral portion are respectively formed with substantially constant diametrical dimensions about the geometrical center axis of the lens in front view of the lens; a cross sectional shape of the peripheral front surface vary in the circumferential direction; and a thickness dimension of the peripheral portion varies in the circumferential direction to thereby shift the center of gravity from the lens geometrical center axis.

2. A contact lens according to claim 1, wherein the optical portion front surface is formed with a center of curvature at a location away from the geometrical center axis of the lens in a same direction as a direction of shift of the center of gravity of the peripheral portion.

3. A contact lens according to claim 1 or 2, wherein the peripheral portion is composed of a first peripheral portion connected to an outer junction of the optical portion, and a second peripheral portion connected to an outer junction of the first peripheral portion and extending out to an edge portion, wherein the first peripheral portion and the second peripheral portion are each of annular shape of substantially constant diametrical dimension around the lens geometrical center axis, with a lens front surface of the first peripheral portion having an aspheric cross section, while a lens front surface of the second peripheral portion has a spheric cross section.

4. A contact lens according to claim 3, wherein a difference between a minimum value and a maximum value for lens thickness at an inner' junction of the second peripheral portion is no more than 0.3 mm around an entire circumference.

5. A contact lens according to claim 3 or 4, wherein a cross sectional shape of the second peripheral portion is substantially constant in the circumferential direction.

6. A contact lens according to any one of claims 1-5, wherein a lens front surface and/or lens back surface of the optical portion is constituted as a toric surface.

7. A contact lens according to any one of claims 1-6, wherein a lens front surface and/or lens back surface of the optical portion is constituted as a multifocal aspherical surface.

8. A method of manufacturing a contact lens according to any one of claims 1-7, wherein a forming die of synthetic resin is produced using a metal mold whose entire cavity-forming face has been continuously machined through a lathe turning process by turning about a single axis, whereby the lens front surface including the optical portion front surface and the peripheral portion front surface are formed in the forming die by means of the cavity-forming face of the metal mold; and the contact lens is molded using the forming die.
